(19)

Europäisches
Patentamt
European
Patent Office
Office européen
des brevets

(11) **EP 2 287 117 A1**

(12) **EUROPEAN PATENT APPLICATION**

(43) Date of publication:
 **23.02.2011 Bulletin 2011/08**

(51) Int Cl.:
 ***C02F 1/469*** (2006.01)

(21) Application number: **10170052.4**

(22) Date of filing: **19.07.2010**

(84) Designated Contracting States:
 **AL AT BE BG CH CY CZ DE DK EE ES FI FR GB GR HR HU IE IS IT LI LT LU LV MC MK MT NL NO PL PT RO SE SI SK SM TR**
 Designated Extension States:
 **BA ME RS**

(30) Priority: **20.08.2009 KR 20090077161**

(71) Applicant: **Samsung Electronics Co., Ltd.**
 **Suwon-si,**
 **Gyeonggi-do 442-742 (KR)**

(72) Inventors:
 • **Kim, Chang-hyun**
  **449-712, Gyeonggi-do (KR)**

 • **Han Sung-Soo**
  **449-712, Gyeonggi-do (KR)**
 • **Song, Tae-won**
  **449-712, Gyeonggi-do (KR)**
 • **Yang, Ho-jung**
  **449-712, Gyeonggi-do (KR)**
 • **Kim, Hyun-seok**
  **449-712, Gyeonggi-do (KR)**
 • **Kang, Hyo-rang**
  **449-712, Gyeonggi-do (KR)**

(74) Representative: **Zijlstra, Robert Wiebo Johan**
 **Elkington and Fife LLP**
 **Prospect House**
 **8 Pembroke Road**
 **Sevenoaks, Kent TN13 1XR (GB)**

(54) **Capacitive deionization device and manufacturing method thereof**

(57) A capacitive deionization device includes; at least one flow path (11) configured for influent water flow, at least one pair of electrodes (13a,13b), at least one charge barrier (12a,12b) disposed between the at least one flow path and a corresponding electrode of the at least one pair of electrodes, and at least one electrolyte solution (14a,14b) disposed between the at least one electrode of the at least one pair of electrodes (13a,13b) and a corresponding charge barrier (12a,12b) of the at least one charge barrier (12a,12b), wherein the at least one electrolyte solution (14a,14b) is different in at least one of ionic concentration and ionic species from the influent water.

FIG. 1

**Description**

BACKGROUND

The present disclosure relates to a capacitive deionization device, and more particularly, a capacitive deionization device including an electrolyte solution having ionic species contained therein, the types and/or total concentration of which differ from those of ionic species contained in influent water to the capacitive deionization device.

Tap water supplied to homes contains hardness components, e.g., various water-hardening minerals such as calcium, though the contents thereof vary according to the region where the home is located. In particular, in Europe where large amounts of limestone components flow into underground water, hardness of tap water is significant.

Unwanted and undesirable scaling easily occurs in a heat exchanger of a home appliance or an inner wall of a boiler when hard water containing high concentrations of hardness components is used therein, and thus energy efficiency of the device is significantly reduced due to the scaling. In addition, hard water is unsuitable for washing due to the difficulty in producing lather. Typical methods for overcoming such problems associated with the use of hard water include (i) removing the scaling with chemicals, and (ii) chemically softening hard water using ion exchange resins, wherein after use the contamination in the ion exchange resin may be removed using a large amount of high-concentration salt water, so that the ion exchange resin may be reused. However, such methods are inconvenient and cause environmental damage. Thus, there is a demand for a technology for simply softening hard water in an environmentally friendly manner.

A capacitive deionization ("CDI") device is used to remove an ionic material from a medium, for example, hard water, by applying a voltage to a pair of electrodes having nano-sized pores to polarize the electrode, so that the ionic material is adsorbed onto a surface of the electrode. In such a CDI device, when a low direct current ("DC") voltage is applied to the electrodes while the medium containing dissolved ions flows between the two electrodes, i.e., a positive electrode and a negative electrode, anions dissolved in the medium are absorbed and concentrated in the positive electrode, and cations dissolved in the medium are absorbed and concentrated in the negative electrode. When current is supplied in a reverse direction, e.g., by electrically shorting the two electrodes, the concentrated ions are desorbed from the negative electrode and positive electrode. Since CDI devices do not use a high potential difference, the energy efficiency thereof is high. Furthermore, CDI devices may also remove harmful ions as well as hardness components when ions are adsorbed onto electrodes, and do not use a chemical to regenerate the electrodes and are thus have a relatively low environmental impact.

However, in general CDI devices, when a potential is applied to the electrodes, a large number of ions, i.e., co-ions, present in pores of the electrodes with the same polarity as the corresponding electrodes are expulsed into effluent water. As such, it is difficult to control all the ions to be moved towards the corresponding electrode. For this reason, CDI devices have a relatively low ion removal efficiency compared to the amount of applied charges.

In order to address the drawbacks of such general CDI devices, Andelman et al. (U.S. Patent No. 6,709,560) introduce a charge-barrier CDI device including a charge barrier such as an ion exchange membrane to improve the ion removal efficiency of the CDI device.

The charge-barrier CDI device has an advantage over general CDI devices especially when it is used to treat water, such as seawater, containing a high concentration of ions, wherein the prevention of co-ion expulsion is more important. However, when the charge-barrier CDI device is used to treat hard water including a hardness component of 300 ppm or less by weight, the concentration of ions in pores of the electrodes is relatively low, and the ion transfer rate in the pores is also low. Thus, the capacitances of electrode materials may not be fully utilized during charging/discharging.

In addition, such general CDI devices or the charge-barrier CDI device exhibit a further lower ion removal efficiency when influent water to be treated contains ions that are unsuitable for generating capacitance of the electrode material.

SUMMARY

Provided is a capacitive deionization device including an electrolyte solution containing ionic species, the types and/or total concentration of which differ from those of ionic species contained in influent water.

Additional aspects will be set forth in part in the description which follows and, in part, will be apparent from the description, or may be learned by practice of the presented embodiments.

According to an aspect of the present disclosure, an embodiment of a capacitive deionization device includes; at least one flow path configured for influent water flow, at least one pair of electrodes; at least one charge barrier disposed between the at least one flow path and a corresponding electrode of the at least one pair of electrodes, and at least one electrolyte solution disposed between at least one electrode of the at least one pair of electrodes and a corresponding charge barrier of the at least one charge barrier, wherein the at least one electrolyte solution is different in at least one of ionic concentration and ionic species from the influent water.

In other words, the capacitive deionization device comprises at least one flow path configured for influent water flow; at least one pair of electrodes including a first electrode and a second electrode respectively disposed on opposing sides of the flow path; at least one first charge barrier disposed between the at least one flow path and a corresponding first electrode of the at least one pair of electrodes; and at least one electrolyte solution in (direct) contact with at least one first electrode of the at least one pair of electrodes and separated from the at least one flow path by a corresponding first charge barrier of the at least one charge barrier, wherein the at least one electrolyte solution is different in at least one of ionic concentration and ionic species from the influent water.

In one embodiment, the at least one electrolyte solution may include at least two ionic species, the types of the at least two ionic species differ from those of ionic species contained in the influent water.

In one embodiment, the at least one electrolyte solution may include a higher total concentration of ionic species than at total concentration of ionic species contained in the influent water.

In one embodiment, the at least one charge barrier layer may include at least one of a selectively cation-permeable membrane and a selectively anion-permeable membrane.

In one embodiment, the at least one charge barrier and the corresponding electrode of the at least one pair of electrodes may be disposed to be opposite to and separated from each other.

In one embodiment, the capacitive deionization device may further include at least one spacer which separates the at least one charge barrier and the corresponding electrode of the at least one pair of electrodes from each other.

In one embodiment, the at least one charge barrier and corresponding electrode of the at least one electrode may be disposed to contact each other, and the at least one electrolyte solution may be disposed in pores of the at least one electrode.

In one embodiment, the at least one charge barrier may include an ion exchange membrane.

In one embodiment, the ion exchange membrane may have an ion selectivity of about 99% to about 99.999%.

In one embodiment, the at least one electrolyte solution may include ionic species originated from at least one electrolyte selected from the group consisting of LiF, LiCl, LiBr, LiI, NaF, NaCl, NaBr, NaI, KF, KCl, KBr, KI, $LiNO_3$, $NaNO_3$, $KNO_3$, $Li_2SO_4$, $Na_2SO_4$, $K_2SO_4$, $MgCl_2$, $CaCl_2$, $CuCl_2$, $MgSO_4$, $CaSO_4$ and $CuSO_4$.

In one embodiment, the at least one electrolyte solution may include ionic species having a total concentration of about 0.05 M to about 10 M.

In one embodiment, the at least one electrolyte solution may include an acid, and may have a pH of about 1 to about 5.

In one embodiment, the influent water may have an ion conductivity of about 0.01 mS/cm to about 10 mS/cm.

In one embodiment, the at least one electrode may include a polarity-variable electrode.

In one embodiment, the capacitive deionization device may further include at least one spacer respectively defining the at least one the flow path.

In one embodiment, the capacitive deionization device may further include at least one current collector disposed on a side of each of the at least one pair of electrodes opposite to a corresponding flow path of the at least one flow path.

In one embodiment, the plurality of current collectors may be connected to a power source in one of series and parallel.

In one embodiment, the at least one electrode may include an active material, a binder and a conducting agent.

In one embodiment, the active material may include at least one material selected from the group consisting of an activated carbon, aerogel, carbon nanotubes ("CNTs"), a mesoporous carbon, an activated carbon fiber, a graphite oxide and a metal oxide.

According to an aspect of the present disclosure, an embodiment of a capacitive deionization device includes; at least one flow path configured for influent water flow, at least one pair of electrode, each of the at least one pair of electrode including a first electrode and a second electrode, at least one first charge barrier disposed between the at least one flow path and a corresponding first electrode of the at least one pair of electrodes, at least one second charge barrier disposed between the at least one flow path and a corresponding second electrode of the at least one pair of electrodes, and at least one first electrolyte solution disposed between the at least one first electrode and the corresponding first charge barrier, wherein the at least one electrolyte solution is different in at least one of an ionic concentration and ionic species from the influent water.

In one embodiment, the at least one first charge barrier may include a selectively cation-permeable membrane, and the at least one second charge barrier may include a selectively anion-permeable membrane.

In one embodiment, the capacitive deionization device may further include at least one second electrolyte solution disposed between the at least one second electrode of the at least one pair of electrodes and the corresponding second charge barrier, wherein the at least one second electrolyte solution may have the same ionic species and concentration as the at least one electrolyte solution or may differ in at least one of ionic species and/or concentration from the at least one first electrolyte solution, wherein the at least one the second electrode and the corresponding second charge barrier may be disposed to be opposite to and separated from each other or alternatively may contact each other.

In one embodiment, the capacitive deionization device may further include at least one charge barrier layer which divides each flow path of the at least one flow path into a plurality of flow paths, wherein the at least one charge barrier layer may include at least one third charge barrier and at least one fourth charge barrier disposed opposite to and separated from each other, and at least one third electrolyte solution disposed between the at least one third charge barrier and the at least one fourth charge barrier.

In one embodiment, the at least one third charge barrier may include a selectively cation-permeable membrane, and the at least one fourth charge barrier may include a selectively anion-permeable membrane.

In one embodiment, the at least one third electrolyte solution is one of the same as and may differ from at least one of the influent water and the at least one first electrolyte solution in one of ionic concentration and ionic species.

In one embodiment, the capacitive deionization device may further include at least one separator disposed between the at least one the third charge barrier and a corresponding fourth charge barrier of the at least one fourth charge barrier.

BRIEF DESCRIPTION OF THE DRAWINGS

These and/or other aspects will become apparent and more readily appreciated from the following description of the embodiments, taken in conjunction with the accompanying drawings of which:

FIG. 1 is a schematic cross-sectional view of an embodiment of a capacitive deionization ("CDI") device according to the present disclosure;

FIGS. 2 through 5 are cross-sectional views illustrating an embodiment of an operating principle of the embodiment of a CDI device illustrated in FIG. 1;

FIGS. 6 through 9 are schematic cross-sectional views of embodiments of CDI devices according to the present disclosure;

FIG. 10 is a cross-sectional view illustrating an operating principle of the embodiment of a CDI device illustrated in FIG. 9;

FIGS. 11 and 12 are cross-sectional views of embodiments of CDI devices connected to a power source in series and in parallel, according to the present disclosure;

FIG. 13 is a graph showing variation in ion conductivity with respect to time of effluent water passed through each of the cells manufactured in Example 2 and Comparative Example 1; and

FIG. 14 is a graph of an initial deionization efficiency of each of the cells manufactured in Examples 1 through 3, compared to that of the cell manufactured in Comparative Example 1.

DETAILED DESCRIPTION

The invention now will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another elements as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower", can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments of the present invention are described herein with reference to cross section illustrations that are schematic illustrations of idealized embodiments of the present invention. As such, variations from the shapes of the illustrations as a result, for example, of manufacturing techniques and/or tolerances, are to be expected. Thus, embodiments of the present invention should not be construed as limited to the particular shapes of regions illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present invention.

All methods described herein can be performed in a suitable order unless otherwise indicated herein or otherwise clearly contradicted by context. The use of any and all examples, or exemplary language (e.g., "such as"), is intended merely to better illustrate the invention and does not pose a limitation on the scope of the invention unless otherwise claimed. No language in the specification should be construed as indicating any non-claimed element as essential to the practice of the invention as used herein.

Hereinafter, the present invention will be described in detail with reference to the accompanying drawings.

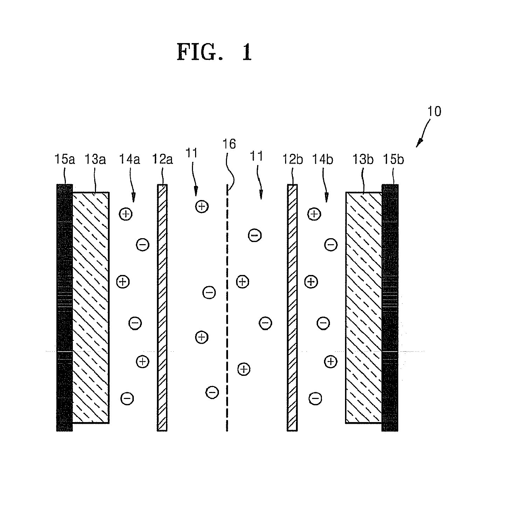

FIG. 1 is a schematic cross-sectional view of an embodiment of a capacitive deionization device 10 according to the present disclosure.

Referring to FIG. 1, the embodiment of a capacitive deionization ("CDI") device 10 includes a flow path 11 for influent water, a pair of charge barriers 12a and 12b, a pair of porous electrodes 13a and 13b impregnated with electrolyte solutions 14a and 14b, respectively, and a pair of current collectors 15a and 15b.

The influent water, which may be hard water, i.e., water with a high concentration of minerals as described below, flows along the flow path 11 and is deionized by the CDI device 10. Throughout the specification, hard water refers to water containing a large amount of calcium ions, magnesium ions and other ions having similar characteristics and producing scaling, and which does not lather easily with soap. The influent water flowing into the flow path 11 may have an ionic conductivity of about 0.01 mS/cm to about 10 mS/cm. When the ionic conductivity of the influent water is within the above range, the ions may be efficiently removed from the influent water without applying a high voltage or applying a large amount of charge carriers (also referred to simply as charges or energy) into the influent water.

The pair of charge barriers 12a and 12b are disposed opposite to and separated from each other with the flow path 11 disposed therebetween. The porous electrodes 13a and 13b, which will be described in more detail later, are ionically separated from the influent water flowing along the flow path 11 by the charge barriers 12a and 12b. However, the present disclosure is not limited to this structure. For example, alternative embodiments include configurations wherein only one of the charge barriers 12a and 12b may be used. In addition, one of the charge barriers 12a and 12b may be a selectively anion-permeable membrane, for example, an anion exchange membrane. In such an embodiment, the other one of the charge barriers 12a and 12b may be a selectively cation-permeable membrane, for example, a cation exchange membrane. Each of the anion exchange membrane and the cation exchange membrane may have an ion selectivity of, for example, about 99% to about 99.999% or higher. When the ion selectivity is within the above range, the ion removal efficiency may be high since the expulsion of co-ions from the pores of the porous electrodes 13a and 13b are efficiently prevented during charging.

The electrolyte solutions 14a and 14b function as media for ion conduction in the pores of the respective porous electrodes 13a and 13b, which will be described in more detail later, selectively between the porous electrode 13a and the charge barrier 12a, and selectively between the porous electrode 13b and the charge barrier 12b, respectively.

At least one of the electrolyte solutions 14a and 14b differ in chemical composition from the influent water as described below. Throughout the specification, when a solution is described as being different from another solution, this means that at least one constituent component thereof is different in one solution from the other solution and/or that the amount of at least one constituent component per unit volume is different between the two solutions. On the other hand, when a solution is described as being substantially the same as another solution, this means that the types of all components and the amounts of the corresponding components per unit volume are substantially the same as between the two solutions.

For example, types and/or a total concentration of ionic species contained in at least one of the electrolyte solutions 14a and 14b may differ from those of ionic species contained in the influent water. In addition, types and/or a total concentration of ionic species contained in the electrolyte solution 14a may be the same as, or may differ from, those of ionic species contained in the electrolyte solution 14b. Throughout the specification, the term 'electrolyte' refers to a material that is dissolved in a solvent, embodiments of which include water, and dissociated into ions to induce the flow of current through the electrolyte solution. In addition, throughout the specification, when types of ionic species are described as being different from another one, this means that a set of ionic species contained in a solution differs from a set of ionic species contained in the other solution. On the other hand, when types of ionic species are described as being substantially the same as another one, this means a set of ionic species contained in a solution is substantially the same as a set of ionic species contained in the other solution. For example, at least one cationic species, for example, potassium ions ($K^+$), contained in at least one of the electrolyte solutions 14a and 14b may differ from any of the cationic species, for example, magnesium ions ($Mg^{2+}$) or calcium ions ($Ca^{2+}$), contained in the influent water, and/or at least one anionic species, for example, chloride ions ($Cl^-$), contained in at least one of the electrolyte solutions 14a and 14b may differ from any of the anionic species, for example, $HCO_3^-$, contained in the influent water.

In addition, the electrolyte solutions 14a and 14b may each independently include ionic species originated from at least one electrolyte selected from the group consisting of LiF, LiCl, LiBr, LiI, NaF, NaCl, NaBr, NaI, KF, KCl, KBr, KI, $LiNO_3$, $NaNO_3$, $KNO_3$, $Li_2SO_4$, $Na_2SO_4$, $K_2SO_4$, $MgCl_2$, $CaCl_2$, $CuCl_2$, $MgSO_4$, $CaSO_4$, $CuSO_4$ and other materials having similar characteristics.

In addition, in one embodiment at least one of the electrolyte solutions 14a and 14b may not contain an impurity and may contain an ionic species that is suitable for generating the capacitance of active materials of the porous electrodes 13a and 13b to be described later.

In the context of the present invention, the term 'impurity' is to include ionic species like $Ca^{2+}$ or $Mg^{2+}$ which are generally less suitable to be part of electrolyte components for interaction with the porous electrodes 13a and 13b because they have relatively large hydrated radii to transport through narrow micropores of active electrode materials like activated carbon. The term 'impurity' may also relate to an organic solvent that may increase the resistance of electrolyte solution. Since the CDI device 10 includes the porous electrodes 13a and 13b impregnated with the respective electrolyte solutions 14a and 14b having the characteristics described above, the elements of the CDI device 10 that directly contact the electrolyte solutions 14a and 14b may be formed of a wide variety of materials. Therefore, the porous electrodes 13a and 13b, the current collectors 15a and 15b, and the charge barriers 12a and 12b, may be made from active materials, and thus the CDI device 10 including the same has the following advantages described in detail below.

First, an on-set potential at which a detrimental reaction occurs varies according to a combination of the types of electrolytes and the types of electrode materials. Decomposition of the electrolytes and/or the porous electrode materials due to an overvoltage immediately deteriorates performance of the electrodes. Thus, an electrolyte having a wide range of compatibility with respect to a material of interest, e.g., for use in the porous electrodes 12a and 13b may be used to improve durability (cycle performance) of the CDI device including the same.

Second, the sizes of ions and the size of a hydrous layer formed from ions and water molecules vary according to the ionic species contained in an electrolyte solution. Thus, the ion transfer rate in the pores of the porous electrodes 13a and 13b, and in particular, in the mesopores and/or micropores of the porous electrodes 13a and 13b, is restricted when the sizes of hydrated ions are excessively large compared to the pore size of the porous electrodes 13a and 13b. In addition, the charge density of ions and the size of ions are significant factors determining applicability of inner surfaces of micropores of the porous electrodes to a CDI device including the same. Thus, ion transfer rate in the pores and capacitance generating characteristics of the porous electrodes may be improved by choosing an electrolyte suitable for a structure of an active material thereof.

Third, the formation of scales, which may potentially occur on the electrodes, may be prevented by adjusting the composition and pH of the electrolyte solution because the porous electrodes 13a and 13b are compatible for use with a wide range of electrolyte solutions.

When the total concentration of the ionic species contained in at least one of the electrolyte solutions 14a and 14b is higher than the total concentration of the ionic species contained in the influent water, the CDI device 10 may include the porous electrodes 13a and 13b impregnated with electrolyte solutions 14a and 14b. In such an embodiment, the capacitance of the active material and the charge/discharge rate may be improved, and additional capacitance may be generated as a reverse bias voltage is applied. These improvements may be obtained for the following reasons described in detail below.

First, the capacitance may vary according to the concentration of an ionic species, even when the same active material is used. For example, a porous carbon material used as an active material has a well-developed micro- and nano-sized pore network. However, if the concentration of an ionic species permeated into the pores is insufficiently low for adsorption therein, most of the adsorption area of the porous carbon material may not be properly utilized, due to a lack of the electrolyte across the adsorption area, and thus the capacitance is reduced. Thus, most of, or all, the capacitance of the porous carbon material may be used by supplying a sufficient concentration of the electrolyte into the pores of the porous electrodes 13a and 13b.

Second, when the concentration of the ionic species in the pores is sufficient, high-rate charging and discharging are ensured. In a porous material with a complex pore network, the electrical resistance generated due to ions moving in the pores is a factor limiting the charge/discharge rate of the material. A charge/discharge rate of a material is greatly influenced by the pore structure of the material and the ion conductivity of an electrolyte solution. In particular, the charge/discharge rate of the material may be maximized by supplying a high concentration of an electrolyte having high ion conductivity into the pores. Thus, higher current may flow at a given overvoltage.

Third, interfacial characteristics between the charge barrier and the electrolyte solution may be improved. If mass transfer (i.e., ion transfer) at the interface between the charge barrier and the electrolyte solution is not sufficiently fast, the resistance at the interface may be increased. Thus, if an ionic species having a high concentration is disposed between the charge barrier and the electrolyte solution, concentration polarization caused by ion depletion during discharging may be suppressed.

Fourth, energy efficiency in deionization and regeneration processes may be improved as a result of the improvement in interfacial characteristics and concentration of ionic species in the pores described above.

Finally, if a sufficient ionic species is present in the pores, each of the porous electrodes may be charged to an opposite polarity by applying an electric potential with a polarity opposite to the polarity of the electric potential applied for deionization. The amount of charges and energy stored during this "reverse bias charging" may be used in a charging process (deionization), and thus theoretically the storable charges in the porous electrodes may double. For example, if a pair of electrodes are conventionally operated within a potential window of about 0 V to about 1 V, a range of about -1 V to about 1 V may be used during deionization due to initial reverse bias charging in an embodiment of a CDI device according to the present disclosure. Thus, the amount of charges ($Q = C \times \Delta V$) is doubled. In the equation above, C denotes capacitance, and $\Delta V$ denotes voltage difference. On the other hand, when the concentration of the ionic species in the pores is low, such reverse bias charging may not occur due to a lack of the ionic species for adsorption.

In addition, the CDI device 10 may increase a recovery rate represented by Equation 1 below.

<Equation 1>

$$\text{Recovery rate (\%)} = \text{Total volume of treated water/ Total volume of influent water inflowed for deionization and electrode regeneration} \times 100$$

When the influent water is hard water, the total concentration of ionic species, such as $K^+$ and $Cl^-$ ions, contained in at least one of the electrolyte solutions 14a and 14b, may be, for example, about 0.05 M to about 10 M. When the total concentration of the ionic species contained in at least one of the electrolyte solutions 14a and 14b is within the above range, the capacitance of the corresponding electrode may be fully generated during charging and discharging, and the charge/discharge rate may be improved. In addition, at least one of the electrolyte solutions 14a and 14b may include an acid, and may have a pH of about 1 to about 5. When at least one of the electrolyte solutions 14a and 14b has a pH within the above range, water may not be readily decomposed on the surface of the corresponding electrode so that a wider potential window of voltages for stable operation is ensured. In addition, precipitates which may occur due to the combination with $OH^-$ ions and $Ca^{2+}$ or $Mg^{2+}$ ions may not be generated. The acid prevents the deterioration of the porous electrodes 13a and 13b due to hard ionic components. Examples of the acid may include HCl, $HNO_3$, $H_2SO_4$, citric acid and/or other materials with similar characteristics.

In addition, the CDI device 10 may further include an apparatus (not shown) for performing at least one of circulating, supplementing and exchanging the electrolyte solutions 14a and 14b.

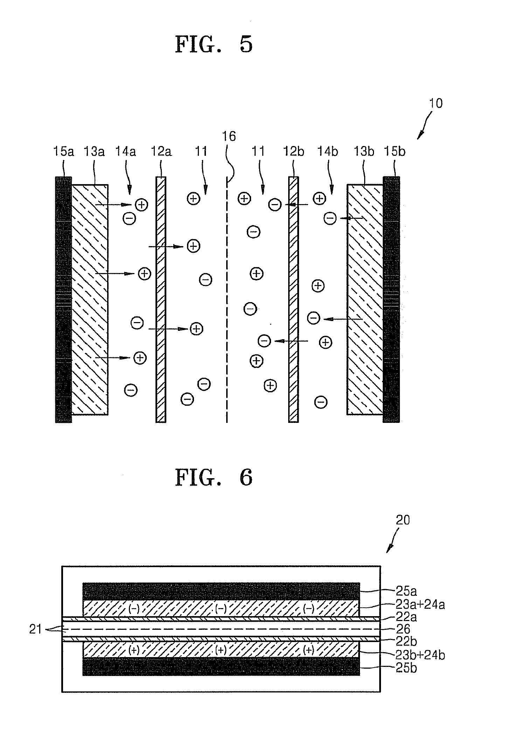

The pair of porous electrodes 13a and 13b may be disposed to be opposite to and separated from each other with one, or a pair, of the charge barriers 12a and 12b therebetween as illustrated in the embodiment shown in FIG. 1. The porous electrodes 13a and 13b may be disposed to be opposite to and separated from their corresponding charge barriers 12a and 12b, respectively. In such an embodiment, the electrolyte solutions 14a and 14b may be disposed in the pores of the respective electrodes 13a and 13b, between the porous electrode 13a and the charge barrier 12a, and between the porous electrode 13b and the charge barrier 12b (refer to FIGS. 1 through 5). Alternative embodiments include configurations wherein the porous electrodes 13a and 13b may be disposed to contact the charge barriers 12a and 12b, respectively (such an embodiment will be described in more detail with respect to FIGS. 6-12). In such an alternative embodiment, the electrolyte solutions 14a and 14b may be disposed in the pores of the porous electrode 13a and the pores of the porous electrode 13b (refer to FIGS. 6 through 12), respectively.

Although not illustrated, each of the porous electrodes 13a and 13b may include an active material, a binder and a conducting agent.

The active material may include a porous material having an electrical double layer capacitance. Throughout the specification, the term "electrical double layers" refer to layers having an electrical structure similar to a condenser formed between the remainder of the porous electrode 13a and the electrolyte solution 14a, and/or between the porous electrode 13b and the electrolyte solution 14b. The electrical double layers may include anions or cations having an opposite polarity to the corresponding porous electrode 13a or 13b adsorbed onto the porous electrode 13a or 13b that is impregnated with the corresponding electrolyte solution 14a or 14b and positively (+) or negatively (-) charged. In addition, the capacitance of the active material may be increased by 30% or greater using the above-described electrolyte solutions 14a and 14b or hard water containing a high concentration of an ionic species, instead of the influent water (hard water containing a low concentration of an ionic species), as an electrolyte solution. The active material may include at least one material selected from the group consisting of an activated carbon, aerogel, carbon nanotubes ("CNTs"), a mesoporous carbon, an activated carbon fiber, a graphite oxide, a metal oxide and other materials with similar characteristics.

Embodiments of the binder may include styrene butadiene rubber ("SBR"), carboxymethylcellulose ("CMC"), polytetrafluoroethlyene ("PTFE"), or other materials with similar characteristics.

Embodiments of the conducting agent may include carbon black, vapor growth carbon fiber ("VGCF"), graphite, a combination of at least two thereof, or other materials having similar characteristics.

In addition, embodiments include configurations wherein at least one of the porous electrodes 13a and 13b may be a polarity-variable electrode. For example, after the porous electrodes 13a and 13b are charged with a reverse bias voltage, i.e., the porous electrodes 13a and 13b may be applied with a polarity opposite to that applied for deionization by applying an electric potential having the opposite polarity to the electric potential applied for deionization in order for the porous electrode 13a to function as a negative electrode and for the porous electrode 13b to function as a positive electrode. Such a process is referred to as "reverse bias charging". The influent water may be deionized by applying an electric potential having a polarity opposite to that of each of the porous electrodes 13a and 13b during reverse bias charging. Such a process is simply referred to as "charging". The reverse bias charging and charging processes will be described in further detail below.

The pair of current collectors 15a and 15b is electrically connected to an external power source (not shown). The current collectors 15a and 15b apply a voltage to the pair of porous electrodes 13a and 13b, and are disposed on a side of the porous electrodes 13a and 13b opposite to the flow path 11, respectively. The current collectors 15a and 15b may include a graphite plate, a graphite foil, at least one metal selected from the group consisting of copper (Cu), aluminum (Al), nickel (Ni), iron (Fe), cobalt (Co), and titanium (Ti), a metal mixture thereof, an alloy thereof or other materials having similar characteristics.

The CDI device 10 may further include a spacer 16 defining the flow path 11, a spacer (not shown) defining a space between the porous electrode 13a and the charge barrier 12a, and/or a spacer (not shown) defining a space between the porous electrode 13b and the charge barrier 12b. These spacers may be ion-permeable and electron-insulative, and may include an open mesh, a filter or other material with similar characteristics.

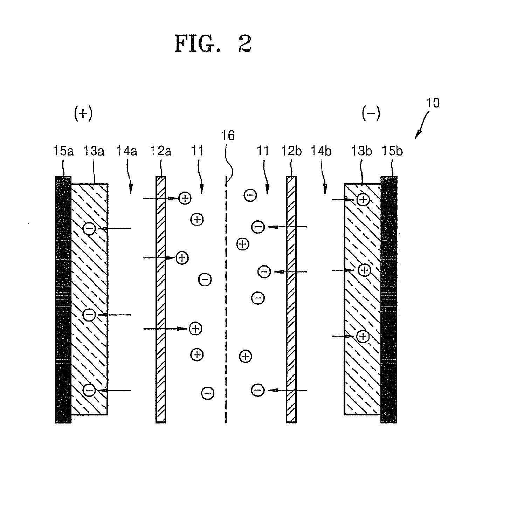

FIGS. 2 through 5 are schematic cross-sectional views illustrating an embodiment of an operating principle of the CDI device 10 illustrated in FIG. 1.

Referring back to FIG. 1, the electrolyte solutions 14a and 14b are disposed between the porous electrodes 13a and 13b and the charge barriers 12a and 12b, respectively, wherein charges of electrolytic cations and charges of electrolytic anions are in balance in the electrolyte solutions 14a and 14b and charges in the influent water 11 are in balance. Influent water flows along the flow path 11. The influent water contains hardness components, such as $Ca^{2+}$ or $Mg^{2+}$, and possibly harmful ions, such as $Cl^-$. The charge barrier 12a may be, for example, a cation exchange membrane, whereas the charge barrier 12b may be, for example, an anion exchange membrane, although embodiments include configurations wherein the charge barrier 12a may be an anion exchange membrane and charge barrier 12b may be a cation exchange membrane.

Referring to FIG. 2, when a voltage is applied to the pair of porous electrodes 13a and 13b, anions disposed in the electrolyte solution 14a are attracted to and adsorbed onto the porous electrode 13a that is positively (+) charged, and cations disposed in the electrolyte solution 14b are attracted to and adsorbed onto the porous electrode 13b that is negatively (-) charged. In this case, the higher the concentration of ionic species contained in at least one of the electrolyte solutions 14a and 14b, the higher the adsorption rate of ions onto the corresponding porous electrodes 13a and 13b due to a reduction in electrolytic resistance in the pores of the corresponding porous electrodes 13a and/or 13b. The cations in the electrolyte solution 14a are migrated into the influent water, which flows along the flow path 11, through the charge barrier 12a, which in this embodiment is a cation exchange membrane, by an electrostatic repelling force and, to a lesser extent, by their attraction to the negatively charged porous electrode 13b. The anions in the electrolyte solution 14b are migrated into the influent water through the charge barrier 12b, which in this embodiment is an anion exchange membrane, by an electrostatic repelling force and, to a lesser extend, by their attraction to the positively charged porous electrode 13a. Thus, the concentrations of the ions in the electrolyte solutions 14a and 14b are lowered, whereas the concentration of the ions in the influent water is increased. The series of operations described above with reference to FIG. 2 is referred to as "reverse bias charging". In addition, water expulsed through the flow path 11 during reverse bias charging is separated from deionized water which will be produced during a charging process (to be described in more detail below) after the reverse bias charging. Embodiments include configurations wherein the separated water from reverse bias charging is isolated for disposal or reuse.

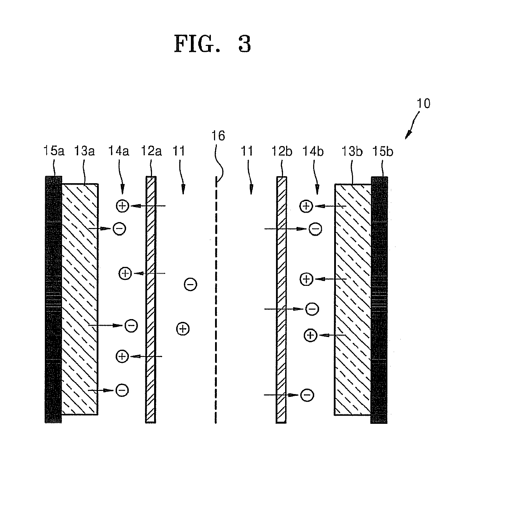

Then, as illustrated in FIG. 3, when the porous electrodes 13a and 13b are electrically shorted, e.g., a voltage is not applied thereto or a similar voltage is applied to both the porous electrodes 13a and 13b, while new influent water is inflowed, anions are desorbed from the porous electrode 13a, and cations are desorbed from the porous electrode 13b. The desorbed anions do not pass the charge barrier 12a, which in the present embodiment is a cation exchange membrane, and thus remain in the electrolyte solution 14a. The desorbed cations do not pass the charge barrier 12b, which in the present embodiment is an anion exchange membrane, and thus remain in the electrolyte solution 14b. Thus, upon release of the anions by the porous electrode 13a, the electrolyte solution 14a reaches a charge-imbalance condition with more anions than cations. In order to maintain a charge balance in the electrolyte solution 14a, cations in the influent water flowing along the flow path 11 migrate into the electrolyte solution 14a through the charge barrier 12a. Likewise, upon release of the anions by the porous electrode 13b, the electrolyte solution 14b reaches a charge-imbalance condition with more cations than anions. In order to maintain a charge balance in the electrolyte solution 14b, anions in the influent water flowing along the flow path 11 migrate into the electrolyte solution 14b through the charge barrier 12b. The influent water is primarily deionized through the operations described above with reference to FIG. 3 so that treated water is obtained. Because the porous electrodes 13a and 13b are charged to a polarity opposite to that in the deionization process during the reverse bias charging process described with reference to FIG. 2, the charge capacity is increased during the deionization process. A degree of deionization of the influent water may be confirmed by measuring the ion conductivity of the treated water expulsed from the CDI device 10.

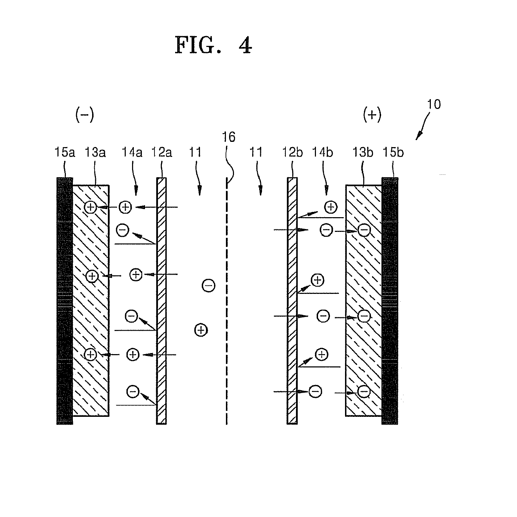

Next, as illustrated in FIG. 4, when an electric potential having a polarity opposite to the electric potential applied for the reverse bias charging is applied to the porous electrodes 13a and 13b, cations in the electrolyte solution 14a are adsorbed onto the porous electrode 13a that is negatively (-) charged, and anions in the electrolyte solution 14b are adsorbed onto the porous electrode 13b that is positively (+) charged in a configuration substantially opposite that illustrated in FIG. 2 with respect to the reverse bias charging process. The anions in the electrolyte solution 14a do not pass the charge barrier 12a, which in the present embodiment is a cation exchange membrane, and thus remain in the electrolyte solution 14a. The cations in the electrolyte solution 14b do not pass the charge barrier 12b, which in the present embodiment is an anion exchange membrane, and thus remain in the electrolyte solution 14b.

Thus, due to the adsorption of the cations out of the electrolyte solution 14a into the porous electrode 13a, the electrolyte solution 14a initially reaches a charge-imbalance condition with more anions than cations. In order to keep a charge balance in the electrolyte solution 14a, cations in the influent water flowing along the flow path 11 migrate into the electrolyte solution 14a through the charge barrier 12a. Likewise, the electrolyte solution 14b initially reaches a charge-imbalance condition with more cations than anions due to the adsorption of the anions out of the electrolyte solution 14b into the porous electrode 13b. In order to keep a charge balance in the electrolyte solution 14b, anions in the influent water flowing along the flow path 11 migrate into the electrolyte solution 14b through the charge barrier 12b.

The operations described with reference to FIG. 4 are referred to as charging. As a result, the influent water is secondarily deionized so that additional treated water is obtained. In the embodiment described above the secondary deionization is performed above by electrically shorting the porous electrodes 13a and 13b and then applying an electric potential having a polarity opposite to that applied for the reverse bias charging, as described with reference to FIGS. 3 and 4. However, alternative embodiments include configurations wherein an electric potential having an opposite polarity to that of the electric potential applied for the reverse bias charging may be immediately applied without electrically shorting the porous electrodes 13a and 13b in order to perform the secondary deionization.

Finally, as illustrated in FIG. 5, when the porous electrodes 13a and 13b are electrically shorted, cations are desorbed from the porous electrode 13a, whereas anions are desorbed from the porous electrode 13b. The cations and anions migrate through the charge barriers 12a and 12b, respectively, so that the electrolyte solutions 14a and 14b and the influent water are in a charge balance condition. The operations described with reference to FIG. 5 are referred to as discharging. The porous electrodes 13a and 13b are regenerated through the discharging. A degree of regeneration of the porous electrodes 13a and 13b may be confirmed by measuring the ion conductivity of the effluent water expulsed from the CDI device 10. In addition, water expulsed through the flow path 11 during discharging is separated from deionized water which is produced during the charging process. Embodiments include configurations wherein the water expulsed from the CDI device 10 during discharging is isolated for disposal or reuse.

FIGS. 6 through 9 are schematic cross-sectional views of embodiments of CDI devices 20, 30, 40 and 50 according to additional embodiments of the present disclosure.

Hereinafter, the CDI devices 20, 30, 40, and 50 illustrated in FIGS. 6 through 9 will be described through comparison with the embodiment of a CDI device 10 of FIG. 1. Detailed structures and operating principles of the CDI devices 20, 30, 40 and 50 illustrated in FIGS. 6 through 8 are substantially similar to those of the CDI device 10 of FIG. 1 described above with reference to FIGS. 2 through 5, and thus a detailed description thereof will not be repeated.

A difference between the embodiment of a CDI device 20 of FIG. 6 and the embodiment of a CDI device 10 of FIG. 1 is that, in the embodiment of a CDI device 20 of FIG. 6, charge barriers 22a and 22b are disposed to contact porous electrodes 23a and 23b, respectively, and thus electrolyte solutions 24a and 24b are present only in the pores of the porous electrodes 23a and 23b, respectively. In one embodiment, the porous electrode 23a functions as a negative electrode, and the porous electrode 23b functions as a positive electrode during charging. In such an embodiment, the charge barriers 22a and 22b may be, for example, a cation exchange membrane and an anion exchange membrane, respectively. In addition, the CDI device 20 includes a separator 26 defining flow paths 21 for influent water, and current collectors 25a and 25b disposed on sides of the porous electrodes 23a and 23b, respectively.

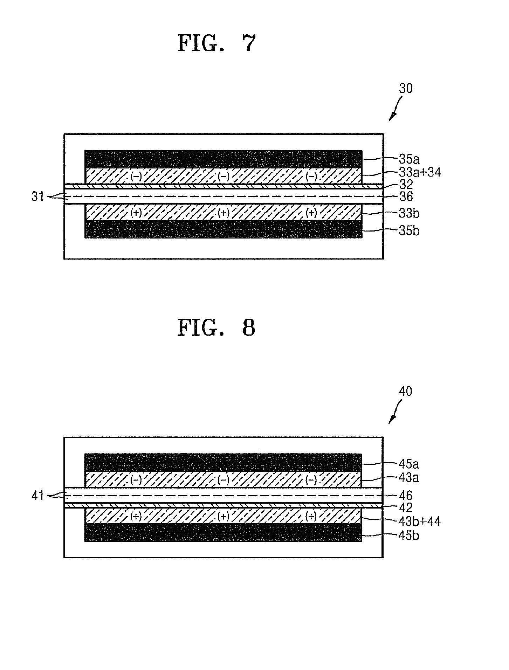

A difference between the CDI device 30 of FIG. 7 and the CDI device 10 of FIG. 1 is that, in the CDI device 30 of FIG. 7, a charge barrier 32, such as a cation exchange membrane, is disposed to contact a porous electrode 33a, and no charge barrier for a porous electrode 33b is included, and an electrolyte solution 34 is disposed only in the pores of the porous electrode 33a. In such an embodiment, the porous electrode 33a functions as a negative electrode and the porous electrode 23b functions as a positive electrode during charging. In addition, the CDI device 30 includes a separator 36 defining flow paths 31 for influent water, and current collectors 35a and 35b disposed on sides of the porous electrodes 33a and 33b, respectively.

A difference between the CDI device 40 of FIG. 8 and the CDI device 10 of FIG. 1 is that, in the CDI device 40 of FIG. 8, a charge barrier 42, such as an anion exchange membrane, is disposed to contact a porous electrode 43b, and no charge barrier for a porous electrode 43a is included, and an electrolyte solution 44 is disposed only in the pores of the porous electrode 43b. In such an embodiment, the porous electrode 43a functions as a negative electrode and the porous electrode 43b functions as a positive electrode during charging. In addition, the CDI device 40 includes a separator 46 defining flow paths 41 for influent water, and current collectors 45a and 45b disposed on sides of the porous electrodes 43a and 43b, respectively. Essentially, the embodiment of a CDI device 40 of FIG. 8 is substantially similar to the embodiment of a CDI device 30 of FIG. 7, with the exception that the single charge barrier is positioned at different locations in the two devices.

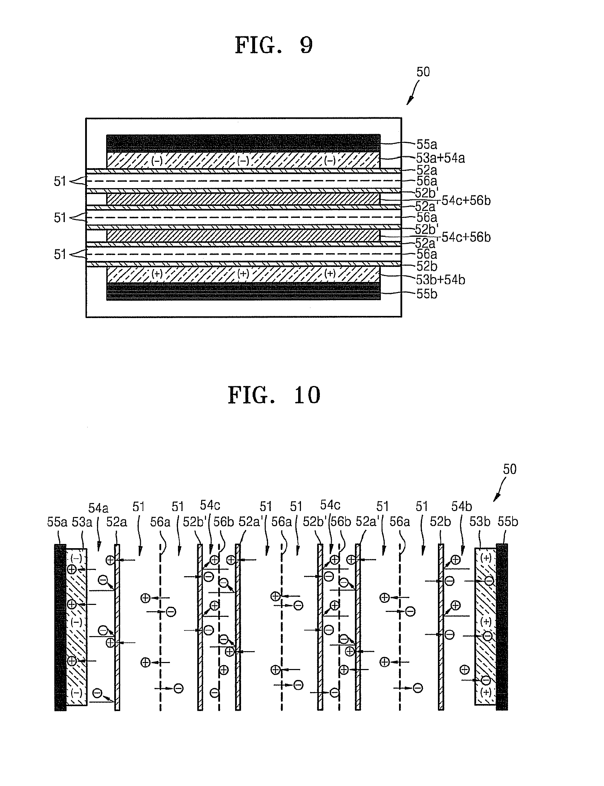

A difference between the CDI device 50 of FIG. 9 and the CDI device 10 of FIG. 1 is that, in the CDI device 50 of FIG. 9, a plurality of charge barrier layers are disposed between a pair of charge barriers 52a and 52b disposed to contact porous electrodes 53a and 53b, respectively, so as to form a plurality of flow paths 51 therebetween, each of the charge barrier layers including a charge barrier 52a', an electrolyte solution 54c and a separator 56b and a charge barrier 52b' in this order from the porous electrode 53b, and electrolyte solutions 54a and 54b are disposed only in the pores of the porous electrodes 53a and 53b, respectively. In addition, the electrolyte solution 54c may be the same as or different from the influent water and/or at least one of the electrolyte solutions 54a and 54b. The porous electrode 53a functions as a negative electrode, and the porous electrode 53b functions as a positive electrode during charging. In such a configuration, the charge barriers 52a and 52b may be, for example, a cation exchange membrane and an anion exchange membrane, respectively. In addition, the CDI device 50 includes current collectors 55a and 55b disposed on sides of the porous electrodes 53a and 53b, respectively.

FIG. 10 is a cross-sectional view illustrating an exemplary embodiment of an operating principle of the CDI device 50 of FIG. 9. For convenience of explanation, unlike the illustration of FIG.9, the porous electrodes 53a and 53 are illustrated as being separated from the charge barriers 52a and 52b, respectively.

Referring to FIG. 10, when a voltage is applied to the porous electrodes 53a and 53b, cations in the electrolyte solution 54a are adsorbed onto the porous electrode 53a that is negatively (-) charged, whereas anions in the electrolyte solution 54b are adsorbed onto the porous electrode 53b that is positively (+) charged. The anions in the electrolyte solution 54a do not pass the charge barrier 52a, and thus remain in the electrolyte solution 54a despite their repulsion from the negatively charged porous electrode 53a. The cations in the electrolyte solution 54b do not pass the charge barrier 52b, and thus remain in the electrolyte solution 54b despite their repulsion from the positively charged porous electrode 53b. Thus, the electrolyte solution 54a initially reaches a charge-imbalance condition with more anions than cations due to the adsorption of the cations out of the electrolyte solution 54a into the porous electrode 53a. In order to maintain a charge balance in the electrolyte solution 54a, cations in the influent water flowing along the flow paths 51 migrate towards the electrolyte solution 54a through the charge barrier 52a. Likewise, the electrolyte solution 54b initially reaches a charge-imbalance condition with more cations than anions due to the adsorption of the anions out of the electrolyte solution 54b into the porous electrode 53b. In order to maintain a charge balance in the electrolyte solution 54b, anions in the influent water flowing along the flow paths 51 migrate towards the electrolyte solution 54b through the charge barrier 52b. In addition, the electrolyte solution 54c is disposed between each pair of the charge barriers 52a' and 52b' disposed between the electrolyte solutions 54a and 54b. When the cations migrating towards the electrolyte solution 54a flow into the electrolyte solution 54c through the charge barrier 52a', which in the present embodiment is a cation exchange membrane, the cations remain in the electrolyte solution 54c because the cations do not pass the charge barrier 52b', which in the present embodiment is an anion exchange membrane. When the anions migrating towards the electrolyte solution 54b flow into the electrolyte solution 54c through the charge barrier 52b', which is an anion exchange membrane as mentioned above, the anions remain in the electrolyte solution 54c because the anions do not pass the charge barrier 52a', which in the present embodiment is a cation exchange membrane. The operations described with reference to FIG. 10 are referred to as charging. As a result, the influent water is deionized. FIG. 5 may be referred to for a principle of regenerating electrodes and FIG. 2 may be referred to for a principle of reverse bias charging.

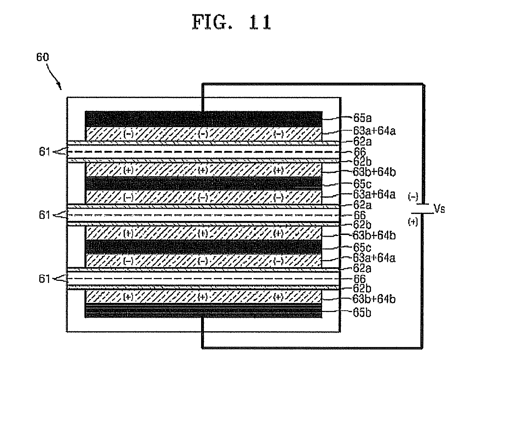

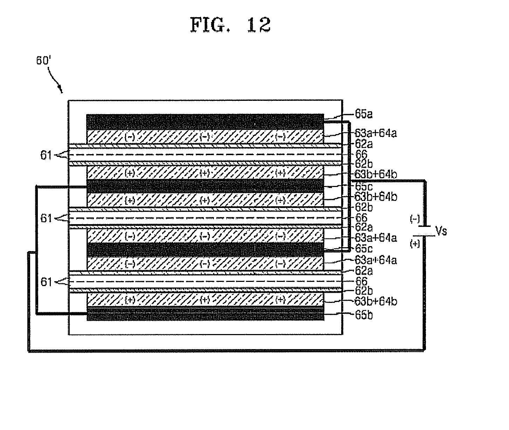

FIGS. 11 and 12 are cross-sectional views of embodiments of CDI devices 60 and 60' connected to a power source in series and in parallel, respectively, according to embodiments of the present disclosure.

Each of the CDI device 60 of FIG. 11 and the CDI device 60' of FIG. 12 includes a plurality of composite structures each of which includes flow paths 61 and a separator 66, a pair of charge barriers 62a and 62b, and a pair of porous electrodes 63a and 63b respectively impregnated with electrolyte solutions 64a and 64b. In the present embodiment, the charge barriers 62a and 62b are disposed to contact the porous electrodes 63a and 63b, respectively, but the present disclosure is not limited thereto. In the present embodiment, the electrolyte solutions 64a and 64b are disposed only in the pores of the respective porous electrodes 63a and 63b. Current collectors 65c are disposed between the composite structures, and current collectors 65a and 65b are respectively disposed to contact outer surfaces of two composite structures disposed at both ends thereof. At least one of the electrolyte solutions 64a and 64b differs from the influent water flowing into the CDI devices 60 and 60'. In addition, the electrolyte solution 64a may be substantially the same as, or different from, the electrolyte solution 64b. In FIG. 11, the current collectors 65a, 65b, and 65c are connected to a power source Vs in series. In FIG. 12, the current collectors 65a, 65b, and 65c are connected to a power source Vs in parallel. Thus, the porous electrodes 63a and 63b disposed at the same locations in the CDI device 60 of FIG. 11 and the CDI device 60' of FIG. 12 may have opposite polarities during charging or discharging. In addition, some of the charge barriers 62a and 62b disposed at the same locations in the CDI device 60 of FIG. 11 and the CDI device 60' of FIG. 12 may be of opposite types (i.e., cation-selective or anion-selective).

Hereinafter, one or more embodiments of the present disclosure will be described in detail with reference to the following examples. However, these examples are not intended to limit the purpose and scope of the one or more embodiments of the disclosure.

Examples

<Example 1: Manufacture of Electrode and Cell>

1) Manufacture of Electrode

In this example, 40 g of activated carbon (having a specific surface area of $1300 m^2/g$), 10 g of carbon black, and 4.17 g of an aqueous suspension of 60% by weight of PTFE, 130 g of propylene glycol, and 100 g of $NH_4HCO_3$ were put into a stirring vessel, kneaded, and then pressed to manufacture a porous electrode. The porous electrode was dried in an oven at 80° C for 2 hours, at 120° C for 1 hour, and at 200° C for 1 hour to complete the manufacture of the porous electrode.

2) Manufacture of Cell

First, the porous electrode, which was dried as described above, was cut into 2 pieces, each having an area of 10 cm x 10 cm ($100 cm^2$), and a weight of each electrode was measured. Each of the porous electrodes had a weight of 5.9 g.

Second, the two electrodes were immersed in an electrolyte solution of 0.5M KCl aqueous solution in a vacuum.

Third, a cell was manufactured by sequentially stacking a current collector, which in this example was a graphite plate, one of the porous electrodes as described above, a cation exchange membrane, which in this example was an ASTOM Neosepta CMX, a separator, which in this example was a water-permeable open mesh, an anion exchange membrane, which in this example was an ASTOM Neosepta AMX, the other one of the porous electrodes as described above, and a current collector, which in this example was a graphite plate.

Fourth, pressure applied to the cell was adjusted with a torque wrench, and the cell was pressurized by turning screws up to a torque of 1.5 Newton-meters (N-m).

Fifth, the electrolyte solution, which in this example was 0.5M KCl aqueous solution, was injected between each of the porous electrodes and the corresponding ion exchange membrane.

<Example 2>

Electrodes and a cell were manufactured in the same manner as in Example 1, except that a 1 M KCl aqueous solution, instead of the 0.5 M KCl aqueous solution, was used as the electrolyte solution.

<Example 3>

Electrodes and a cell were manufactured in the same manner as in Example 1, except that a 4 M KCl aqueous solution, instead of 0.5 M KCl aqueous solution, was used as the electrolyte solution.

<Comparative Example 1>

Electrodes and a cell were manufactured in the same manner as in Example 1, except that hard water having an ion conductivity of 1100 uS/cm, instead of 0.5 M KCl aqueous solution, was used as the electrolyte solution.

<Evaluation Example>

Cell Performance Evaluation

The cells prepared in Examples 1 through 3, and Comparative Example 1 were each operated under the following conditions.

1) Change in Ion Conductivity of Effluent Water with Time

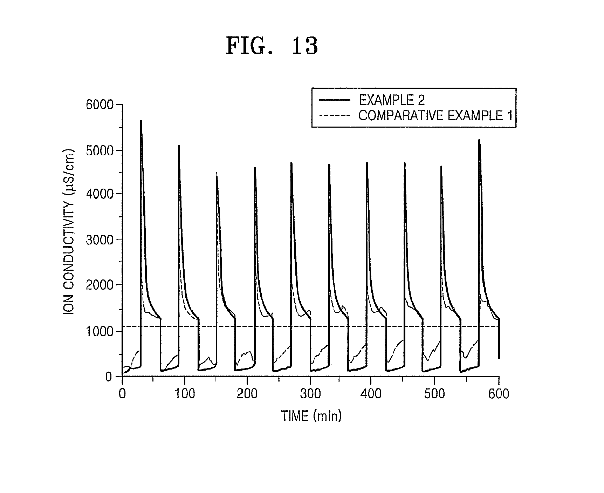

The ion conductivity of effluent water passed through each of the cells manufactured in Example 2 and Comparative Example 1 was continuously measured during operation. The results are illustrated in the graph of FIG. 13. The ion conductivities of the effluent water were measured using an ion conductivity measuring device, specifically the HORIBA, D-54, Sensor: 3561-10D.

First, each cell was operated at room temperature, while a sufficient amount of influent water was supplied to the cell.

Second, hard water, specifically IEC 60734 having 1100uS/cm, was used as the influent water, and the flow rate of the hard water was adjusted to 30 mL/min.

Third, each cell was charged with a reverse bias voltage of -1 V for 20 min and then with a normal bias voltage of 3 V for 30 minutes, and then discharged with a reverse bias voltage of -1 V for 30 min. A single charging process with a normal bias voltage of 3 V for 30 min and a single discharging process with a reverse bias voltage of -1 V for 30 min are collectively referred to as a single charge/discharge cycle. Such a charge/discharge cycle was repeated 10 times.

In FIG. 13, concave peaks represent charge peaks, and convex peaks represent discharge peaks.

Referring to FIG. 13, the effluent water (i.e., treated water) passed through the cell of Example 2 has a lower ion conductivity than the effluent water passed through the cell of Comparative Example 1 during charging, and the ionic conductivity is maintained as low as at the initial charge/discharge cycle after the charge/discharge cycle is repeated, even after multiple charge/discharge cycles, indicating that the cell of Example 2 has a high deionization efficiency and a long lifetime. Furthermore, the effluent water passed through the cell of Example 2 has a higher ion conductivity than the effluent water (i.e., waste water) passed through the cell of Comparative Example 1 during discharging, and the ion conductivity is maintained comparatively high even with repeated charge/discharge cycles, indicating that the cell of Example 2 has a high electrode regeneration efficiency, and a long electrode lifetime.

2) Cell Performance

In addition, the ion conductivities of the effluent water, the charge amount, the discharge amount, and the electrode regeneration ratios for the initial ten charge/discharge cycles were averaged. The results are shown in Table 1 below. The charge amount and discharge amount were measured using a charger/discharger, specifically Model WMPG1000 manufactured by Wonatec. The charge amount refers to a total amount of charges collected in the charger/discharger during charging, and the discharge amount refers to a total amount of charges recovered from the charger/discharger. The charge amount and the discharge amount are obtained by measuring an accumulated amount of current flowed in the charger/discharger during charging and discharging. The electrode regeneration ratio may be calculated using Equation 2 below.

<Equation 2>

Electrode regeneration ratio (%) = Charge amount / Discharge amount X 100

Table 1

|  | Example 1 | Example 2 | Example 3 | Comparative Example 1 |
|---|---|---|---|---|
| Ion conductivity of effluent water (uS/cm) | 374 | 176 | 287 | 484 |
| Charge amount (mAh) | 188 | 230 | 219 | 136 |
| Discharge amount (mAh) | 156 | 214 | 208 | 108 |
| Electrode regeneration ratio (%) | 83 | 93 | 95 | 79.4 |

Referring to Table 1, the effluent water passed through the cells of Examples 1 through 3 has a lower ion conductivity and a higher electrode regeneration ratio than the effluent water passed through the cell of Comparative Example 1, indicating that the cells of Examples 1 through 3 have excellent cell performance and lifetime characteristics.

3) Reverse Bias Charge Amount in Cell

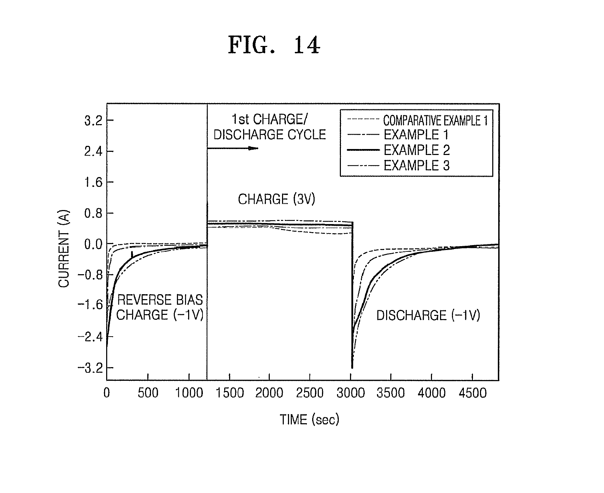

The reverse bias charge amount in each of the cells manufactured in Examples 1 through 3 was compared with that in the cell manufactured in Comparative Example 1. The results are shown in Table 2 below and FIG. 14. The method and apparatus for measuring a reverse bias charge amount used above were used again in this Experiment.

Table 2

|  | Example 1 | Example 2 | Example 3 | Comparative Example 1 |
|---|---|---|---|---|
| Reverse bias charge amount (mAh) | 36 | 121 | 135 | 16 |

Referring to Table 2 and FIG. 14, the cells of Examples 1 through 3 have a significantly higher reverse bias charge amount than the cell of Comparative Example 1. The higher the reverse bias charge amount as described above, the higher the amount of primarily deionized ions in influent water. Thus, the amount of deionized ions in the treated water from the cells of Examples 1 through 3 during reverse bias charging is significantly greater than the amount of deionized ions in the treated water from the cell of Comparative Example 1.

While the present disclosure has been particularly shown and described with reference to exemplary embodiments thereof, it will be understood by those of ordinary skill in the art that various changes in form and details may be made therein without departing from the scope of the present disclosure as defined by the following claims.

**Claims**

1. A capacitive deionization device comprising:

at least one flow path configured for influent water flow;
at least one pair of electrodes including a first electrode and a second electrode respectively disposed on opposing sides of the flow path;
at least one first charge barrier disposed between the at least one flow path and a corresponding first electrode of the at least one pair of electrodes; and
at least one electrolyte solution in contact with at least one first electrode of the at least one pair of electrodes and separated from the at least one flow path by a corresponding first charge barrier of the at least one charge barrier, wherein the at least one electrolyte solution is different in at least one of ionic concentration and ionic species from the influent water.

**2.** The capacitive deionization device of claim 1, wherein the at least one electrolyte solution comprises at least two ionic species, and the types of the at least two ionic species differ from those of ionic species contained in the influent water.

**3.** The capacitive deionization device of claim 1 or 2, wherein the at least one electrolyte solution comprises a higher total concentration of ionic species than a total concentration of ionic species contained in the influent water.

**4.** The capacitive deionization device of any of claims 1-3, wherein the at least one first charge barrier layer comprises at least one of a selectively cation-permeable membrane and a selectively anion-permeable membrane.

**5.** The capacitive deionization device of claim 1, wherein the at least one first charge barrier and the corresponding first electrode of the at least one pair of electrodes are disposed opposite to and separated from each other, and the at least one electrolyte solution is disposed in between the at least one first charge barrier and the corresponding first electrode of the at least one pair of electrodes.

**6.** The capacitive deionization device of claim 5, further comprising at least one spacer which separates the at least one charge barrier and the corresponding electrode of the at least one pair of electrodes from each other.

**7.** The capacitive deionization device of claim 1, wherein the at least one first charge barrier and the corresponding first electrode of the at least one pair of electrodes are disposed in contact with each other, and the at least one electrolyte solution is disposed in pores of the corresponding first electrode.

**8.** The capacitive deionization device of claim 1, further comprising at least one spacer respectively defining the at least one the flow path.

**9.** The capacitive deionization device of claim 1, further comprising at least one current collector disposed on a side of each of the at least one pair of electrodes opposite to a corresponding flow path of the at least one flow path.

**10.** The capacitive deionization device of claim 1, wherein at least the first electrode of the at least one pair of electrodes comprises an active material, a binder and a conducting agent, wherein the active material comprises at least one material selected from the group consisting of an activated carbon, aerogel, carbon nanotubes, a mesoporous carbon, an activated carbon fiber, a graphite oxide and a metal oxide.

**11.** A capacitive deionization device according to any of claims 1-10, further comprising:at least one second charge barrier disposed between the at least one flow path and a corresponding second electrode of the at least one pair of electrodes.

**12.** The capacitive deionization device of claim 11, wherein the at least one first charge barrier comprises a selectively cation-permeable membrane, and the at least one second charge barrier comprises a selectively anion-permeable membrane.

**13.** The capacitive deionization device of claim 11, further comprising at least one second electrolyte solution in contact with the at least one second electrode of the at least one pair of electrodes and separated from the at least one flow path by the corresponding second charge barrier, wherein the at least one second electrolyte solution has the same ionic species and concentration as the at least one first electrolyte solution or is different in at least one of ionic concentration and ionic species from the at least one first electrolyte solution.

**14.** The capacitive deionization device of claim 13, wherein the at least one second electrode and the corresponding second charge barrier are disposed opposite to one another, and are disposed separated from each otheror disposed contacting each other.

**15.** The capacitive deionization device of claim 11, further comprising at least one charge barrier layer which divides each flow path of the at least one flow path into a plurality of flow paths, wherein the at least one charge barrier layer comprises at least one third charge barrier and at least one fourth charge barrier disposed opposite to and separated from each other, and at least one third electrolyte solution disposed between the at least one third charge barrier and the at least one fourth charge barrier.

**16.** The capacitive deionization device of claim 15, wherein the at least one third charge barrier comprises a selectively cation-permeable membrane, and the at least one fourth charge barrier comprises a selectively anion-permeable membrane.

17. The capacitive deionization device of claim 15, wherein the at least one third electrolyte solution is one of the same as or different from at least one of the influent water and the at least one first electrolyte solution in one of ionic concentration and ionic species.

18. A method of manufacturing a capacitive deionization device, the method comprising:

configuring at least one flow path for influent water flow;
providing at least one pair of electrodes disposed on opposing sides of the flow path;
disposing at least one charge barrier between the at least one flow path and a corresponding electrode of the at least one pair of electrodes; and
disposing at least one electrolyte solution between at least one electrode of the at least one pair of electrodes and a corresponding charge barrier of the at least one charge barrier, wherein the at least one electrolyte solution is different in at least one of ionic concentration and ionic species from the influent water.

FIG. 1

# FIG. 2

FIG. 3

FIG. 4

# FIG. 5

# FIG. 6

# FIG. 7

30

35a
33a+34
32
36
33b
35b

31

# FIG. 8

40

45a
43a
46
42
43b+44
45b

41

FIG. 9

FIG. 10

## FIG. 11

FIG. 12

FIG. 13

# FIG. 14

Europäisches
Patentamt

European
Patent Office

Office européen
des brevets

## EUROPEAN SEARCH REPORT

Application Number

EP 10 17 0052

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 6 709 560 B2 (ANDELMAN MARC D [US] ET AL) 23 March 2004 (2004-03-23) <br> * column 7, line 60 - column 8, line 30; figure 1 * <br> ----- | 1-18 | INV. <br> C02F1/469 |
| A | US 2007/158185 A1 (ANDELMAN MARC D [US] ET AL) 12 July 2007 (2007-07-12) <br> * the whole document * <br> ----- | 1-18 | |
| A | WO 2009/062872 A1 (VOLTEA LTD [GB]; REINHOUDT HANK ROBERT [NL]; WAL ALBERT VAN DER [NL];) 22 May 2009 (2009-05-22) <br> * the whole document * <br> ----- | 1-18 | |
| A | OREN ET AL: "Capacitive deionization (CDI) for desalination and water treatment - past, present and future (a review)", DESALINATION, ELSEVIER, AMSTERDAM, NL, vol. 228, no. 1-3, 15 August 2008 (2008-08-15), pages 10-29, XP022735169, ISSN: 0011-9164, DOI: DOI:10.1016/J.DESAL.2007.08.005 [retrieved on 2008-06-18] * the whole document * <br> ----- | 1-18 | TECHNICAL FIELDS SEARCHED (IPC) <br><br> C02F |

The present search report has been drawn up for all claims

| Place of search | Date of completion of the search | Examiner |
|---|---|---|
| The Hague | 10 December 2010 | Liebig, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 17 0052

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2010

| Patent document cited in search report | | Publication date | Patent family member(s) | | Publication date |
|---|---|---|---|---|---|
| US 6709560 | B2 | 23-03-2004 | US | 2002167782 A1 | 14-11-2002 |
| | | | US | 2004174657 A1 | 09-09-2004 |
| US 2007158185 | A1 | 12-07-2007 | NONE | | |
| WO 2009062872 | A1 | 22-05-2009 | AR | 069287 A1 | 13-01-2010 |
| | | | AU | 2008323015 A1 | 22-05-2009 |
| | | | EP | 2212254 A1 | 04-08-2010 |

EPO FORM P0459

For more details about this annex : see Official Journal of the European Patent Office, No. 12/82

**EP 2 287 117 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6709560 B, Andelman